# EUROPEAN PATENT APPLICATION

(11) **EP 3 404 602 A1**
(43) Date of publication of application: **21.11.2018**
(21) Application number: 17741645.0
(22) Date of filing: 18.01.2017
(51) Int. Cl.: G06Q 20/16, G06Q 20/32, G06Q 20/34, H04L 12/66, G06Q 20/40, G06Q 20/38, H04W 4/00

(54) **ELECTRONIC DEVICE AND METHOD FOR PERFORMING PAYMENT**

(30) Priority: 19.01.2016 KR 20160006639
(71) Applicant: Samsung Electronics Co., Ltd., Suwon-si, Gyeonggi-do 16677 (KR)
(72) Inventor: PARK, Yong Seok, Yongin-si Gyeonggi-do 16840 (KR); KIM, In Ho, Suwon-si Gyeonggi-do 16545 (KR); LEE, Je Min, Yongin-si Gyeonggi-do 16951 (KR); LEE, Joon Hee, Suwon-si Gyeonggi-do 16537 (KR); CHOI, Won June, Seoul 05513 (KR); CHOI, Hoon, Suwon-si Gyeonggi-do 16543 (KR); KIM, Jong Ho, Ansan-si Gyeonggi-do 15595 (KR); OH, Seung Won, Suwon-si Gyeonggi-do 16543 (KR); KIM, Ye Na, Suwon-si Gyeonggi-do 16683 (KR); LEE, Yong Wan, Seoul 08646 (KR)
(74) Representative: Jacobs, Bart
(86) International application number: PCT/KR2017/000596
(87) International publication number: WO 2017/126879

(57) **Abstract**

Various embodiments of the present invention relate to an electronic device comprising: an MST module; a display; a wireless communication module; and a processor, wherein the processor is configured to: identify a location information of the electronic device; identify a request for payment; determine, in response to the request, a payment transmission scheme corresponding to the location information; and transmit, to an external electronic device, payment information related to the payment by using the MST module while varying a data set or transmission period of the payment information according to the payment transmission scheme. Other embodiments that can be recognized through the specification are also possible.

## Description

### Technical Field

Various embodiments of the present disclosure relate to an electronic device and a method for performing secure payment.

### Background Art

With the development of information and communication technologies, network devices, such as base stations, have been installed all over the country and electronic devices may exchange data with other electronic devices through networks to allow users to freely use the networks anywhere in the country.

In addition, recent electronic devices may provide various functions to users. The electronic devices may perform a payment function, as well as a telephone call function, a multimedia function, or the like. For example, an electronic device may have credit card information registered in advance and may exchange information related to payment with an external device by using a communication function. To use the payment function off-line, the electronic device may include an antenna for payment and may transmit the card information to enable payment.

### Disclosure

### Technical Problem

In making mobile payment using a smartphone in the related art, a payment means, such as a credit card, which is used for the mobile payment, may not be available in a region other than the country in which the payment means has been issued. Various embodiments of the present disclosure may provide a method in which a user uses a registered payment means in a region other than the country where the payment means has been issued.

### Technical Solution

In accordance with an aspect of the present disclosure, an electronic device includes an MST module, a display, a wireless communication module, and a processor, and the processor identifies a location of the electronic device, identifies a request for payment, determines a payment transmission scheme corresponding to the location in response to the request, and transmits a signal to an external electronic device through the MST module by changing a data set of payment information related to the payment, or by changing a transmission period, according to the payment transmission scheme.

In accordance with another aspect of the present disclosure, a method related to payment performed in an electronic device includes identifying a location of the electronic device, identifying a request for payment, determining a payment transmission scheme corresponding to the location in response to the request, and transmitting a signal to an external electronic device through a magnetic secure transmission (MST) module operatively connected to the electronic device, by changing a data set of payment information related to the payment, or by changing a transmission period, according to the payment transmission scheme.

In accordance with another aspect of the present disclosure, a computer-readable storage medium stores an instruction that, when executed, causes at least one processor to identify a location of an electronic device, to identify a request for payment, to determine a payment transmission scheme corresponding to the location in response to the request, and to transmit a signal to an external electronic device through an MST module by changing a data set of payment information related to the payment, or by changing a transmission period, according to the payment transmission scheme.

Other aspects, advantages, and salient features of the disclosure will become apparent to those skilled in the art from the following detailed description, which, taken in conjunction with the annexed drawings, discloses various embodiments of the present disclosure.

### Advantageous Effects

According to various embodiments of the present disclosure, the electronic device and the method may differently display payment means that are available in foreign countries or external regions, among a plurality of payment means registered in a payment application, thereby enabling a user to easily select the payment means in the foreign countries or the external regions. In addition, the electronic device and the method according to various embodiments of the present disclosure may generate and radiate a payment signal including various combinations of a plurality of pieces of information to increase a payment success rate.

### Description of Drawings

FIG. 1 illustrates an electronic device in a network environment, according to various embodiments of the present disclosure.
FIG. 2 is a block diagram of an electronic device, according to various embodiments of the present disclosure.
FIG. 3 is a block diagram of a program module, according to various embodiments of the present disclosure.
FIG. 4 illustrates a configuration of an electronic device for performing a payment service, according to various embodiments of the present disclosure.
FIG. 5 is a flowchart illustrating a method for displaying an available payment means on a payment application in an electronic device, according to various embodiments of the present disclosure.
FIG. 6 illustrates a binary string obtained by encoding track 1 information and track 2 information of a credit card, according to various embodiments of the present disclosure.
FIG. 7 illustrates a pulse including a plurality of pieces of track information according to various embodiments of the present disclosure.
FIG. 8 illustrates a payment signal including a mixture of a simple transmission sequence and a complex transmission sequence, according to various embodiments of the present disclosure.
FIG. 9 illustrates an execution screen of a payment application, according to various embodiments of the present disclosure.
FIG. 10 illustrates an execution screen of a payment application, according to various embodiments of the present disclosure.
FIG. 11 is a flowchart illustrating a method for radiating a payment signal of a selected credit card in an electronic device, according to various embodiments of the present disclosure.
FIG. 12 illustrates a mobile payment environment according to various embodiments of the present disclosure.
FIG. 13 illustrates another form of an electronic device according to an embodiment.
FIG. 14 illustrates a method for transmitting a payment signal in an electronic device, according to various embodiments of the present disclosure.

### Mode for Invention

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the present disclosure, the expressions "have", "may have", "include" and "comprise", or "may include" and "may comprise" used herein indicate existence of corresponding features (e.g., components such as numeric values, functions, operations, or parts) but do not exclude presence of additional features.

In the present disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in the present disclosure may be used to refer to various components regardless of the order and/or the priority and to distinguish the relevant components from other components, but do not limit the components. For example, "a first user device" and "a second user device" indicate different user devices regardless of the order or priority. For example, without departing the scope of the present disclosure, a first component may be referred to as a second component, and similarly, a second component may be referred to as a first component.

It will be understood that when an component (e.g., a first component) is referred to as being "(operatively or communicatively) coupled with/to" or "connected to" another component (e.g., a second component), it may be directly coupled with/to or connected to the other component or an intervening component (e.g., a third component) may be present. In contrast, when an component (e.g., a first component) is referred to as being "directly coupled with/to" or "directly connected to" another component (e.g., a second component), it should be understood that there are no intervening component (e.g., a third component).

According to the situation, the expression "configured to" used in the present disclosure may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other parts. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in the present disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of the present disclosure. In some cases, even if terms are terms which are defined in the present disclosure, they may not be interpreted to exclude embodiments of the present disclosure.

An electronic device according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automated teller machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of the present disclosure may not be limited to the above-described electronic devices and may include other electronic devices and new electronic devices according to the development of technologies.

Hereinafter, electronic devices according to various embodiments will be described with reference to the accompanying drawings. In the present disclosure, the term "user" may refer to a person who uses an electronic device or may refer to a device (e.g., an artificial intelligence electronic device) that uses the electronic device.

In the following drawings, the electronic device according to various embodiments of the present disclosure is assumed as a smartphone.

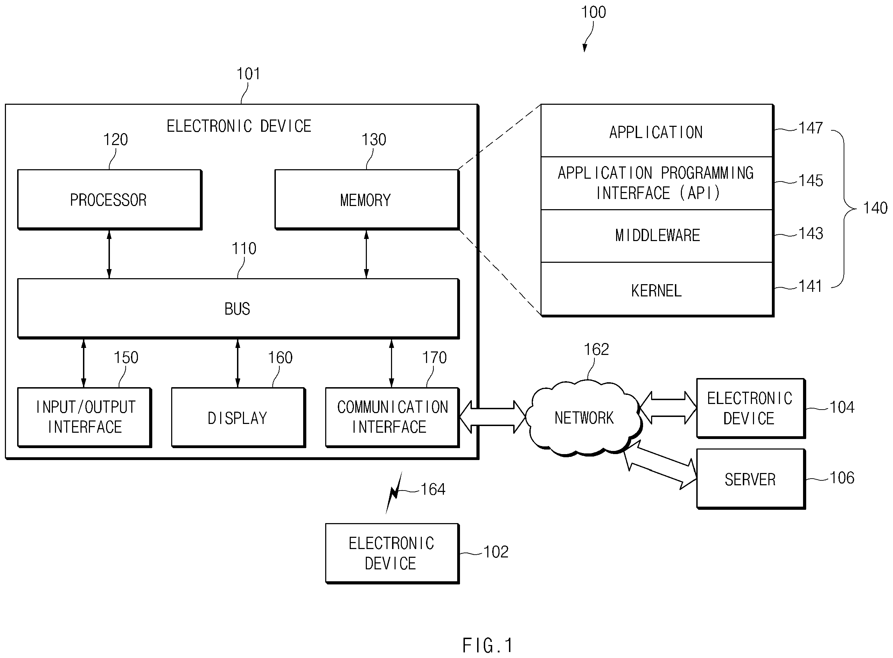

FIG. 1 illustrates an electronic device in a network environment system, according to various embodiments.

Referring to FIG. 1, according to various embodiments, an electronic device 101, a first electronic device 102, a second electronic device 104, or a server 106 may be connected each other over a network 162 or a short range communication 164. The electronic device 101 may include a bus 110, a processor 120, a memory 130, an input/output interface 150, a display 160, and a communication interface 170. According to an embodiment, the electronic device 101 may not include at least one of the above-described components or may further include other component(s).

For example, the bus 110 may interconnect the above-described components 110 to 170 and may include a circuit for conveying communications (e.g., a control message and/or data) among the above-described components.

The processor 120 may include one or more of a central processing unit (CPU), an application processor (AP), or a communication processor (CP). For example, the processor 120 may perform an arithmetic operation or data processing associated with control and/or communication of at least other components of the electronic device 101.

The memory 130 may include a volatile and/or nonvolatile memory. For example, the memory 130 may store commands or data associated with at least one other component(s) of the electronic device 101. According to an embodiment, the memory 130 may store software and/or a program 140. The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete components of the electronic device 101 so as to control or manage system resources.

The middleware 143 may perform, for example, a mediation role such that the API 145 or the application program 147 communicates with the kernel 141 to exchange data.

Furthermore, the middleware 143 may process task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function (e.g., an instruction) for a file control, a window control, image processing, a character control, or the like.

The input/output interface 150 may play a role, for example, of an interface which transmits a command or data input from a user or another external device, to other component(s) of the electronic device 101. Furthermore, the input/output interface 150 may output a command or data, received from other component(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

For example, the communication interface 170 may establish communication between the electronic device 101 and an external device (e.g., the first electronic device 102, the second electronic device 104, or the server 106). For example, the communication interface 170 may be connected to the network 162 over wireless communication or wired communication to communicate with the external device (e.g., the second electronic device 104 or the server 106).

The wireless communication may use at least one of, for example, long-term evolution (LTE), LTE Advanced (LTE-A), Code Division Multiple Access (CDMA), Wideband CDMA (WCDMA), Universal Mobile Telecommunications System (UMTS), Wireless Broadband (WiBro), Global System for Mobile Communications (GSM), or the like, as cellular communication protocol. Furthermore, the wireless communication may include, for example, the short range communication 164. The short range communication 164 may include at least one of wireless fidelity (Wi-Fi), Bluetooth, near field communication (NFC), magnetic secure transmission (MST), a global navigation satellite system (GNSS), or the like.

The MST may generate a pulse in response to transmission data using an electromagnetic signal, and the pulse may generate a magnetic field signal. The electronic device 101 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (Glonass), a Beidou navigation satellite system (hereinafter referred to as "Beidou"), or an European global satellite-based navigation system (hereinafter referred to as "Galileo") based on an available region, a bandwidth, or the like. Hereinafter, in the present disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., LAN or WAN), an Internet, or a telephone network.

Each of the first and second electronic devices 102 and 104 may be a device of which the type is different from or the same as that of the electronic device 101. According to an embodiment, the server 106 may include a group of one or more servers. According to various embodiments, all or a portion of operations that the electronic device 101 will perform may be executed by another or plural electronic devices (e.g., the first electronic device 102, the second electronic device 104 or the server 106). According to an embodiment, in the case where the electronic device 101 executes any function or service automatically or in response to a request, the electronic device 101 may not perform the function or the service internally, but, alternatively additionally, it may request at least a portion of a function associated with the electronic device 101from another device (e.g., the electronic device 102 or 104 or the server 106). The other electronic device may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

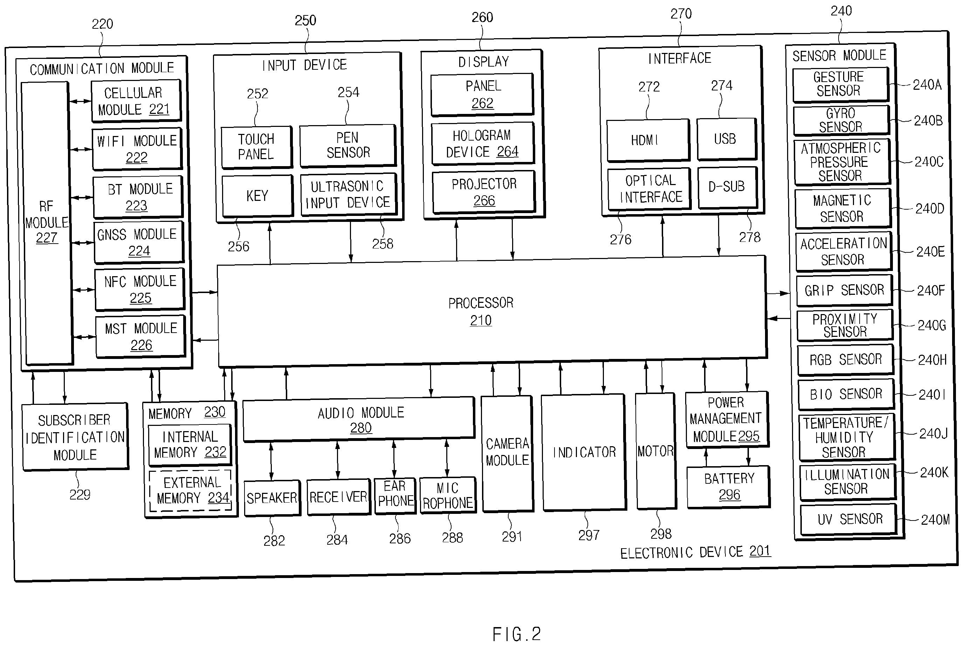

FIG. 2 illustrates a block diagram of an electronic device, according to various embodiments.

Referring to FIG. 2, an electronic device 201 may include, for example, all or a part of the electronic device 101 illustrated in FIG. 1. The electronic device 201 may include one or more processors (e.g., an application processor (AP)) 210, a communication module 220, a subscriber identification module 229, a memory 230, a sensor module 240, an input device 250, a display 260, an interface 270, an audio module 280, a camera module 291, a power management module 295, a battery 296, an indicator 297, and a motor 298.

The processor 210 may drive, for example, an operating system (OS) or an application to control a plurality of hardware or software components connected to the processor 210 and may process and compute a variety of data. For example, the processor 210 may be implemented with a System on Chip (SoC). According to an embodiment, the processor 210 may further include a graphic processing unit (GPU) and/or an image signal processor. The processor 210 may include at least a part (e.g., a cellular module 221) of components illustrated in FIG. 2. The processor 210 may load a command or data, which is received from at least one of other components (e.g., a nonvolatile memory), into a volatile memory and process the loaded command or data. The processor 210 may store a variety of data in the nonvolatile memory.

The communication module 220 may be configured the same as or similar to the communication interface 170 of FIG. 1. The communication module 220 may include the cellular module 221, a Wi-Fi module 222, a Bluetooth (BT) module 223, a GNSS module 224 (e.g., a GPS module, a Glonass module, a Beidou module, or a Galileo module), a near field communication (NFC) module 225, a MST module 226and a radio frequency (RF) module 227.

The cellular module 221 may provide, for example, voice communication, video communication, a character service, an Internet service, or the like over a communication network. According to an embodiment, the cellular module 221 may perform discrimination and authentication of the electronic device 201 within a communication network by using the subscriber identification module (e.g., a SIM card) 229. According to an embodiment, the cellular module 221 may perform at least a portion of functions that the processor 210 provides. According to an embodiment, the cellular module 221 may include a communication processor (CP).

Each of the Wi-Fi module 222, the BT module 223, the GNSS module 224, the NFC module 225, or the MST module 226 may include a processor for processing data exchanged through a corresponding module, for example. According to an embodiment, at least a part (e.g., two or more) of the cellular module 221, the Wi-Fi module 222, the BT module 223, the GNSS module 224, the NFC module 225, or the MST module 226 may be included within one Integrated Circuit (IC) or an IC package.

For example, the RF module 227 may transmit and receive a communication signal (e.g., an RF signal). For example, the RF module 227 may include a transceiver, a power amplifier module (PAM), a frequency filter, a low noise amplifier (LNA), an antenna, or the like. According to another embodiment, at least one of the cellular module 221, the Wi-Fi module 222, the BT module 223, the GNSS module 224, the NFC module 225, or the MST module 226may transmit and receive an RF signal through a separate RF module.

The subscriber identification module 229 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 230 (e.g., the memory 130) may include an internal memory 232 or an external memory 234. For example, the internal memory 232 may include at least one of a volatile memory (e.g., a dynamic random access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 234 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 234 may be operatively and/or physically connected to the electronic device 201 through various interfaces.

Furthermore, the memory 230 may further include a security module (not illustrated). The security module may be a module that includes a storage space of which a security level is higher than that of the memory 230 and may be a circuit that guarantees safe data storage and a protected execution environment. The security module may be implemented with a separate circuit and may include a separate processor. For example, the security module may be in a smart chip or a secure digital (SD) card, which is removable, or may include an embedded secure element (eSE) embedded in a fixed chip of the electronic device 201. Furthermore, the security module may operate based on an operating system (OS) that is different from the OS of the electronic device 201. For example, the security module may operate based on java card open platform (JCOP) OS.

The sensor module 240 may measure, for example, a physical quantity or may detect an operation state of the electronic device 201. The sensor module 240 may convert the measured or detected information to an electric signal. For example, the sensor module 240may include at least one of a gesture sensor 240A, a gyro sensor 240B, a barometric pressure sensor 240C, a magnetic sensor 240D, an acceleration sensor 240E, a grip sensor 240F, the proximity sensor 240G, a color sensor 240H (e.g., red, green, blue (RGB) sensor), a biometric sensor 2401, a temperature/humidity sensor 240J, an illuminance sensor 240K, or an UV sensor 240M. Although not illustrated, additionally or alternatively, the sensor module 240 may further include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one or more sensors included therein. According to an embodiment, the electronic device 201 may further include a processor that is a part of the processor 210 or independent of the processor 210 and is configured to control the sensor module 240. The processor may control the sensor module 240 while the processor 210 remains at a sleep state.

The input device 250 may include, for example, a touch panel 252, a (digital) pen sensor 254, a key 256, or an ultrasonic input unit 258. For example, the touch panel 252 may use at least one of capacitive, resistive, infrared and ultrasonic detecting methods. Also, the touch panel 252 may further include a control circuit. The touch panel 252 may further include a tactile layer to provide a tactile reaction to a user.

The (digital) pen sensor 254 may be, for example, a part of a touch panel or may include an additional sheet for recognition. The key 256 may include, for example, a physical button, an optical key, a keypad, or the like. The ultrasonic input device 258 may detect (or sense) an ultrasonic signal, which is generated from an input device, through a microphone (e.g., a microphone 288) and may check data corresponding to the detected ultrasonic signal.

The display 260 (e.g., the display 160) may include a panel 262, a hologram device 264, or a projector 266. The panel 262 may be the same as or similar to the display 160 illustrated in FIG. 1. The panel 262 may be implemented, for example, to be flexible, transparent or wearable. The panel 262 and the touch panel 252 may be integrated into a single module. The hologram device 264 may display a stereoscopic image in a space using a light interference phenomenon. The projector 266 may project light onto a screen so as to display an image. For example, the screen may be arranged in the inside or the outside of the electronic device 201. According to an embodiment, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature (D-sub) 278. The interface 270 may be included, for example, in the communication interface 170 illustrated in FIG. 1. Additionally or alternatively, the interface 270 may include, for example, a mobile high definition link (MHL) interface, a SD card/multi-media card (MMC) interface, or an infrared data association (IrDA) standard interface.

The audio module 280 may convert a sound and an electric signal in dual directions. At least a component of the audio module 280 may be included, for example, in the input/output interface 150 illustrated in FIG. 1. The audio module 280 may process, for example, sound information that is input or output through a speaker 282, a receiver 284, an earphone 286, or the microphone 288.

For example, the camera module 291 may shoot a still image or a video. According to an embodiment, the camera module 291 may include at least one or more image sensors (e.g., a front sensor or a rear sensor), a lens, an image signal processor (ISP), or a flash (e.g., an LED or a xenon lamp).

The power management module 295 may manage, for example, power of the electronic device 201. According to an embodiment, a power management integrated circuit (PMIC), a charger IC, or a battery or fuel gauge may be included in the power management module 295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 296 and a voltage, current or temperature thereof while the battery is charged. The battery 296 may include, for example, a rechargeable battery and/or a solar battery.

The indicator 297 may display a specific state of the electronic device 201 or a part thereof (e.g., the processor 210), such as a booting state, a message state, a charging state, and the like. The motor 298 may convert an electrical signal into a mechanical vibration and may generate the following effects: vibration, haptic, and the like. Although not illustrated, a processing device (e.g., a GPU) for supporting a mobile TV may be included in the electronic device 201. The processing device for supporting the mobile TV may process media data according to the standards of digital multimedia broadcasting (DMB), digital video broadcasting (DVB), MediaFlo™, or the like.

Each of the above-mentioned components of the electronic device according to various embodiments of the present disclosure may be configured with one or more parts, and the names of the components may be changed according to the type of the electronic device. In various embodiments, the electronic device may include at least one of the above-mentioned components, and some components may be omitted or other additional components may be added. Furthermore, some of the components of the electronic device according to various embodiments may be combined with each other so as to form one entity, so that the functions of the components may be performed in the same manner as before the combination.

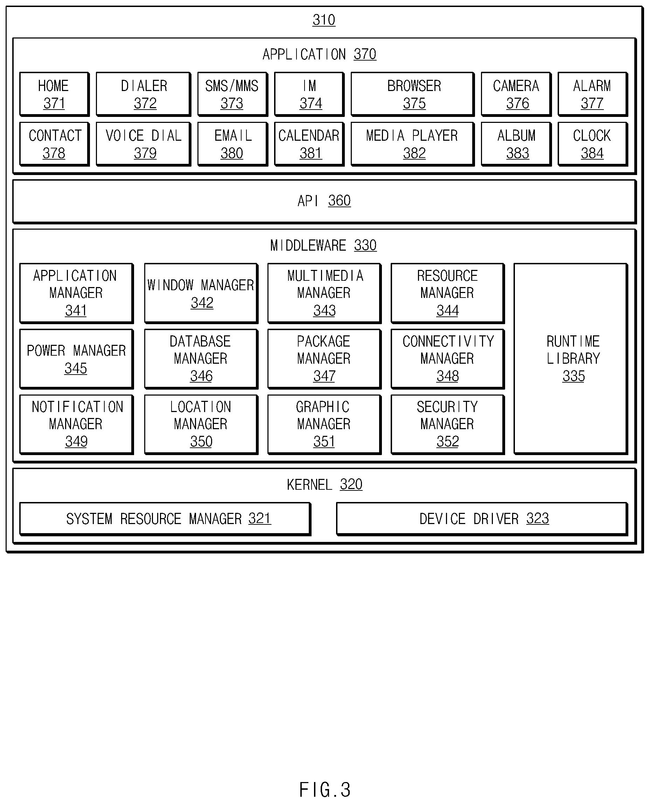

FIG. 3 illustrates a block diagram of a program module, according to various embodiments.

According to an embodiment, a program module 310 (e.g., the program 140) may include an operating system (OS) to control resources associated with an electronic device (e.g., the electronic device 101), and/or diverse applications (e.g., the application program 147) driven on the OS. The OS may be, for example, Android™, iOS™, Windows™, Symbian™, Tizen™, or Bada™.

The program module 310 may include a kernel 320, a middleware 330, an application programming interface (API) 360, and/or an application 370. At least a portion of the program module 310 may be preloaded on an electronic device or may be downloadable from an external electronic device (e.g., the first electronic device 102, the second electronic device 104, the server 106, or the like).

The kernel 320 (e.g., the kernel 141) may include, for example, a system resource manager 321 or a device driver 323. The system resource manager 321 may perform control, allocation, or retrieval of system resources. According to an embodiment, the system resource manager 321 may include a process managing unit, a memory managing unit, or a file system managing unit. The device driver 323 may include, for example, a display driver, a camera driver, a Bluetooth driver, a shared memory driver, a USB driver, a keypad driver, a Wi-Fi driver, an audio driver, or an inter-process communication (IPC) driver.

The middleware 330 may provide, for example, a function that the application 370 needs in common, or may provide diverse functions to the application 370 through the API 360 to allow the application 370 to efficiently use limited system resources of the electronic device. According to an embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, or a payment manager 354.

The runtime library 335 may include, for example, a library module that is used by a compiler to add a new function through a programming language while the application 370 is being executed. The runtime library 335 may perform input/output management, memory management, or capacities about arithmetic functions.

The application manager 341 may manage, for example, a life cycle of at least one application of the application 370. The window manager 342 may manage a graphic user interface (GUI) resource that is used in a screen. The multimedia manager 343 may identify a format necessary for playing diverse media files, and may perform encoding or decoding of media files by using a codec suitable for the format. The resource manager 344 may manage resources such as a storage space, memory, or source code of at least one application of the application 370.

The power manager 345 may operate, for example, with a basic input/output system (BIOS) to manage a battery or power, and may provide power information for an operation of an electronic device. The database manager 346 may generate, search for, or modify database that is to be used in at least one application of the application 370. The package manager 347 may install or update an application that is distributed in the form of package file.

The connectivity manager 348 may manage, for example, wireless connection such as Wi-Fi or Bluetooth. The notification manager 349 may display or notify an event such as arrival message, appointment, or proximity notification in a mode that does not disturb a user. The location manager 350 may manage location information about an electronic device. The graphic manager 351 may manage a graphic effect that is provided to a user, or manage a user interface relevant thereto. The security manager 352 may provide a general security function necessary for system security, user authentication, or the like. According to an embodiment, in the case where an electronic device (e.g., the electronic device 101) includes a telephony function, the middleware 330 may further include a telephony manager for managing a voice or video call function of the electronic device.

The middleware 330 may include a middleware module that combines diverse functions of the above-described components. The middleware 330 may provide a module specialized to each OS kind to provide differentiated functions. Additionally, the middleware 330 may dynamically remove a part of the preexisting components or may add new components thereto.

The API 360 (e.g., the API 145) may be, for example, a set of programming functions and may be provided with a configuration that is variable depending on an OS. For example, in the case where an OS is Android™ or iOS™, it may provide one API set per platform. In the case where an OS is Tizen™, it may provide two or more API sets per platform.

The application 370 (e.g., the application program 147) may include, for example, one or more applications capable of providing functions for a home 371, a dialer 372, an SMS/MMS 373, an instant message (IM) 374, a browser 375, a camera 376, an alarm 377, a contact 378, a voice dial 379, an e-mail 380, a calendar 381, a media player 382, an album 383, or a timepiece 384, or for offering health care (e.g., measuring an exercise quantity, blood sugar, or the like) or environment information (e.g., information of barometric pressure, humidity, temperature, or the like).

According to an embodiment, the application 370 may include an application (hereinafter referred to as "information exchanging application" for descriptive convenience) to support information exchange between an electronic device (e.g., the electronic device 101) and an external electronic device (e.g., the first electronic device 102 or the second electronic device 104). The information exchanging application may include, for example, a notification relay application for transmitting specific information to an external electronic device, or a device management application for managing the external electronic device.

For example, the notification relay application may include a function of transmitting notification information, which arise from other applications (e.g., applications for SMS/MMS, e-mail, health care, or environmental information), to an external electronic device. Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part) or adjustment of brightness (or resolution) of a display) of the external electronic device which communicates with the electronic device, an application running in the external electronic device, or a service (e.g., a call service, a message service, or the like) provided from the external electronic device.

According to an embodiment, the application 370 may include an application (e.g., a health care application of a mobile medical device) that is assigned in accordance with an attribute of an external electronic device. According to an embodiment, the application 370 may include an application that is received from an external electronic device (e.g., the first electronic device 102, the second electronic device 104, or the server 106). According to an embodiment, the application 370 may include a preloaded application or a third party application that is downloadable from a server. The names of components of the program module 310 according to the embodiment may be modifiable depending on kinds of operating systems.

According to various embodiments, at least a portion of the program module 310 may be implemented by software, firmware, hardware, or a combination of two or more thereof. At least a portion of the program module 310 may be implemented (e.g., executed), for example, by the processor (e.g., the processor 210). At least a portion of the program module 310 may include, for example, modules, programs, routines, sets of instructions, processes, or the like for performing one or more functions.

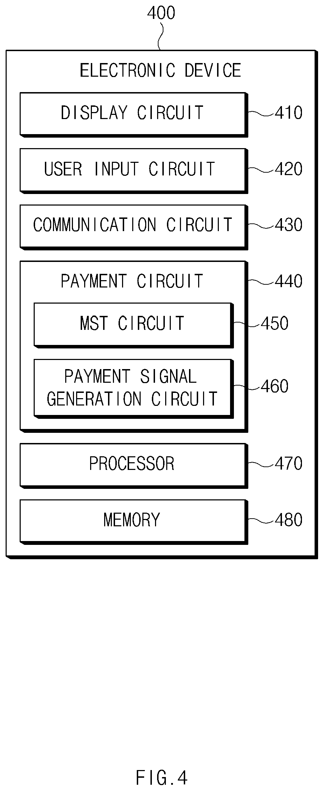

FIG. 4 illustrates a configuration of an electronic device for performing a payment service, according to various embodiments of the present disclosure.

Referring to FIG. 4, an electronic device 400 may include a display circuit 410, a user input circuit 420, a communication circuit 430, a payment circuit 440, a processor 470, and a memory 480. The configuration of the electronic device 400 illustrated in FIG. 4 is merely an implemented embodiment of the present disclosure, and various modifications may be made to the configuration of the electronic device 400. For example, the electronic device 400 may further include a user interface for receiving an input of a command or information from a user. In this case, the user interface may be an input device, such as a keyboard, a mouse, or the like, but may also be a graphical user interface (GUI) displayed on a screen of the electronic device 400.

A payment service according to various embodiments of the present disclosure may correspond to overseas payment and may include, for example, a case of making payment in a country other than the country in which a card has been issued (e.g., a case where a card issued in Korea is used in the United States) or a case of making payment in a district other than the district in which a card has been issued in the United States having autonomous states, China having autonomous nations, or the like (e.g., a case where a card issued in the state of New York is used in the state of Pennsylvania).

According to various embodiments of the present disclosure, the display circuit 410 may display at least one piece of contents on the screen of the electronic device 400. The displayed contents may include an image, a video, an application icon, an application execution screen, or the like.

The operation in which the display circuit 410 displays the contents may be performed by the processor 470.

The user input circuit 420 may receive a user input from the user. The user input may include, for example, a touch input or a hovering input through the user's finger or a stylus (e.g., a touch pen).

The communication circuit 430 may exchange data with an external device (e.g., a card company server or a service providing server (e.g., a server for operating Samsung Pay™)) over a network.

The communication circuit 430 may find the location of the electronic device 400 by using a GPS. Furthermore, the communication circuit 430 may perform short-range communication over a short-range network (e.g., near field communication (NFC), Bluetooth (BT), Bluetooth low energy (BLE), beacon, or the like).

The payment circuit 440 may perform payment through a point of sales (POS) device in an off-line store. For example, the payment circuit 440 may include an MST circuit 450 and a payment signal generation circuit 460.

The MST circuit 450 may transmit magnetic information of a payment means for payment to the POS device through a magnetic secure transmission (MST) antenna. The magnetic information may be a payment signal generated by the payment signal generation circuit 460. For example, the payment signal may be radiated to the POS device through the MST circuit 450 for a predetermined period of time (e.g., 20 seconds or 30 seconds).

According to various embodiments of the present disclosure, the payment circuit 440 may further include an NFC circuit.

According to various embodiments of the present disclosure, the MST circuit 450 may be included in the communication circuit 430, and the payment signal generation circuit 460 may be included in the processor 470.

The processor 470 may be implemented with, for example, a system on chip (SoC) and may include one or more of a central processing unit (CPU), a graphic processing unit (GPU), an image signal processor, an application processor, and a communication processor. The processor 470 may load, from the memory 480, commands or data received from at least one of other components (e.g., the display circuit 410, the user input circuit 420, the communication circuit 430, and the payment circuit 440), may process the loaded commands or data, and may store various pieces of data in the memory 480.

The processor 470 may execute a payment application and may display an application screen of the payment application through the display circuit 410.

The processor 470 may receive the user's request for log-in (including an ID and a password) that is input through the user input circuit 420, and may transmit the log-in request to the service providing server via the communication circuit 430. Furthermore, the processor 470 may receive a result for the log-in request via the communication circuit 430. Hereinafter, a case where the user is normally logged in will be described.

The processor 470 may display one or more registered payment means on the payment application through the display circuit 410. The payment means may include a credit card, a check card, a virtual card (e.g., a PayPal registration card), a prepaid card, a debit card, a gift card, and the like that are available for payment.

The processor 470 may transmit a mobile country code (MCC) or a mobile network code (MNC) to the service providing server via the communication circuit 430. In response, the processor 470 may receive location information of the electronic device 400 from the service providing server. According to various embodiments of the present disclosure, the MCC or the MNC may be performed together with the use of a roaming service in the electronic device 400.

The processor 470 may receive information about the location of the electronic device 400 via the communication circuit 430. For example, the processor 470 may identify the location of the electronic device 400 from a GPS, an NFC network, a BT network, or the like.

The location information of the electronic device 400, which is obtained by the processor 470, may include information about an administrative area, such as a state, a city, an autonomous district, or the like, as well as a country in which the electronic device 400 is located.

The processor 470 may request a payment information transmission scheme (e.g., a radiation pattern) including the obtained location information of the electronic device 400 from the service providing server via the communication circuit 430.

The processor 470 may display payment means available in the location of the electronic device 400, among the registered payment means, on the payment application through the display circuit 410. For example, the processor 470 may identify information about the card company (e.g., Samsung Card, Hyundai Card, Hana Bank, Bank of America (BOA), or the like) and the card brand (e.g., BC card, Visa Card, Master Card, Amex Card, or the like) of each registered payment means to determine whether the registered payment means is available in the location of the electronic device 400. For example, the processor 470 may transmit, to the card company through the service providing server, information input by the user at the time of registering the payment means and may obtain, from the card company, information for determining which country the payment means is available in. Accordingly, in the case where the electronic device 400 is located in the United States, the processor 470 may deactivate cards available only in Korea or cards unavailable in the United States.

The processor 470 may not display unavailable payment means on the payment application. Alternatively, the processor 470 may make the unavailable payment means translucent or dim to distinguish between the unavailable payment means and the available payment means.

The processor 470 may receive, through the user input circuit 420, a user input for selecting any one of the available payment means. The processor 470 may transmit a token request corresponding to the selected payment means to the card company server (or the card brand server) via the communication circuit 430. The token request may include information about the selected payment means, and the token may be alternative card information for the selected payment means.

In response, the processor 470 may receive payment information including the token via the communication circuit 430. The token may include information on availability of the selected payment means. In the case where the electronic device 400 is located in the United States, the selected credit card may not be actually used if the selected credit card has been suspended or has exceeded the limit (e.g., overseas credit limit) or is prevented from being used in the United States, or an amount of payment exceeds the limit even though the card company or the card brand of the selected credit card is available in the United States. Alternatively, in the case where the selected payment means is suspected of being stolen due to frequent cash withdrawals, the processor 470 may receive a notification that the selected payment means is unavailable. For example, in such a case, the processor 470 may be notified that overseas payment is impossible, via the communication circuit 430 or may not receive a token for payment, and therefore the processor 470 may determine that the selected payment means is unavailable for overseas payment.

According to various embodiments of the present disclosure, the processor 470, when executing the payment application, may collectively request token information from the card company server (or the card brand server) of each registered payment means via the communication circuit 430. Alternatively, in the case where one of the plurality of payment means registered in the payment application is selected after the execution of the payment application, the processor 470 may request token information corresponding to the selected payment means from the card company server (or the card brand server) via the communication circuit 430. In another case, the processor 470, when executing the payment application, may receive information about whether each card is available in foreign countries and a payment information transmission scheme (e.g., a radiation pattern) via the communication circuit 430 and may make payment by using the received payment information transmission scheme when payment is requested. According to various embodiments of the present disclosure, the payment information transmission scheme may be differently set according to countries.

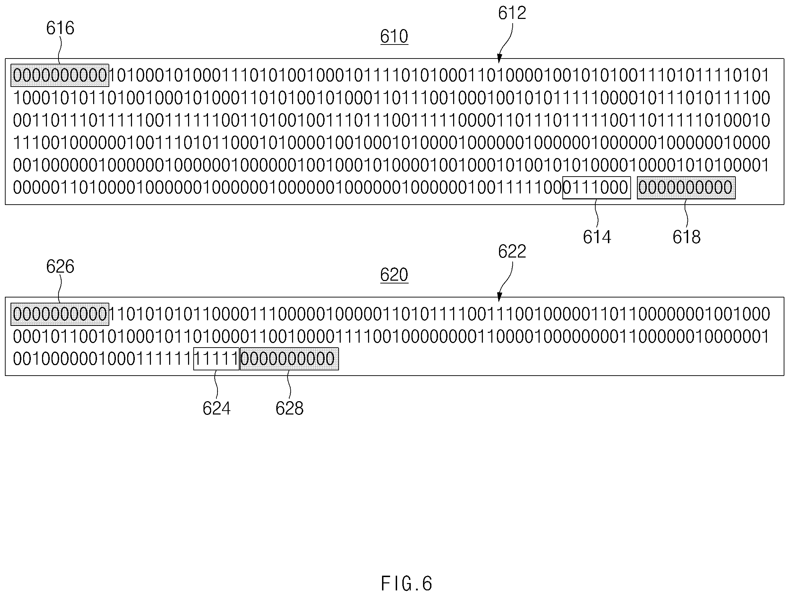

The payment information may include track 1 information and/or track 2 information of the selected payment means, for example, a credit card. The payment signal generation circuit 460 may generate a payment signal by using the payment information and may radiate the generated payment signal through the MST circuit 450. An operation of generating the payment signal will be described with reference to FIGS. 6 to 8.

According to various embodiments of the present disclosure, the location of the electronic device 400 that is to be used in the processor 470 may be a country unit, a state unit, a city unit, or a store unit. Accordingly, to obtain location information in store units, the processor 470 may allow the communication circuit 430 to use a GPS or a short-range network (e.g., an NFC network, a BT network, or the like).

The processor 470 of the present disclosure may transmit the location information obtained in store units to the service providing server via the communication circuit 430 and may receive a payment information transmission scheme (e.g., a radiation pattern) corresponding to a POS device in the store from the service providing server.

The memory 480 may include an internal memory or an external memory. The internal memory may include at least one of, for example, a volatile memory (e.g., a dynamic RAM (DRAM), a static RAM (SRAM), a synchronous dynamic RAM (SDRAM), or the like), a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard disk drive (HDD), or a solid state drive (SSD).

The external memory may further include a flash drive such as compact flash (CF), secure digital (SD), Micro-SD, Mini-SD, extreme digital (xD), a multimedia card (MMC), a memory stick, or the like. The external memory may be operatively and/or physically connected to the electronic device 400 through various interfaces.

It will be understood by those skilled in the art that the display circuit 410, the user input circuit 420, the communication circuit 430, the payment circuit 440, the processor 470, and the memory 480 may be separately implemented, or one or more thereof may be integrated together.

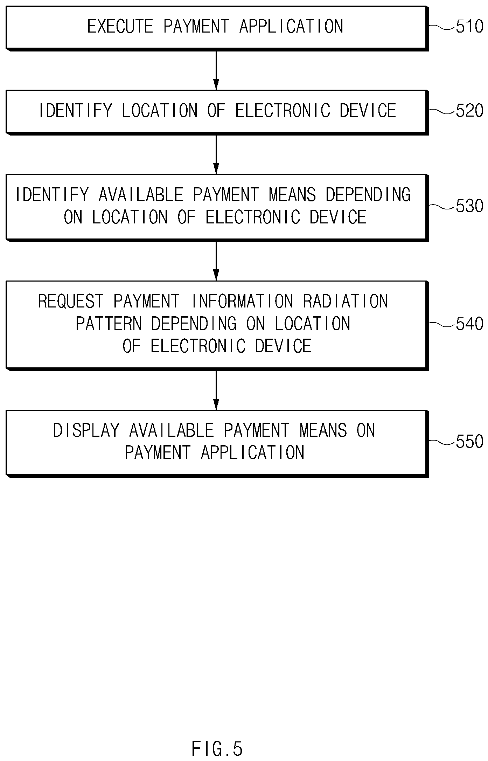

FIG. 5 is a flowchart illustrating a method for displaying an available payment means on a payment application in an electronic device, according to various embodiments of the present disclosure.

Referring to FIG. 5, the method illustrated in FIG. 5 according to various embodiments, in which the electronic device displays the available payment means on the payment application, may include steps that are processed in a time-based order in the electronic devices illustrated in FIGS. 1 to 4 according to various embodiments, a service providing server, and a card company server. Therefore, although omitted in the following description, the contents described in relation to the electronic devices of FIGS. 1 to 4, the service providing server, and the card company server may be similarly applied to the method illustrated in FIG. 5.

In operation 510, the electronic device 400 (e.g., the processor 470) may execute a payment application. The payment application may be performed based on a user input to touch, click, or activate an application icon that is displayed on a screen of the electronic device 400 and corresponds to the payment application.

In operation 520, the electronic device 400 (e.g., the processor 470) may identify the location of the electronic device 400. For example, the electronic device 400 may use an MNC or an MCC to identify the location of the electronic device 400. Specifically, the electronic device 400 (e.g., the communication circuit 430) may obtain the location of the electronic device 400 from a service providing server after transmitting the MNC or the MCC to the service providing server.

In another example, the electronic device 400 may identify the location of the electronic device 400 by using the communication module 220 or the sensor module 240 (e.g., a GPS or short-range communication).

In operation 530, the electronic device 400 (e.g., the processor 470) may identify a payment means available in the location of the electronic device 400, which has been identified in operation 520, among a plurality of payment means registered in advance in the payment application executed in operation 510. For example, the electronic device 400 may identify a payment means available in the corresponding location (e.g., country), through information (available country and unavailable country) obtained from card company servers through the service providing server, based on card information input at the time of registering the plurality of payment means.

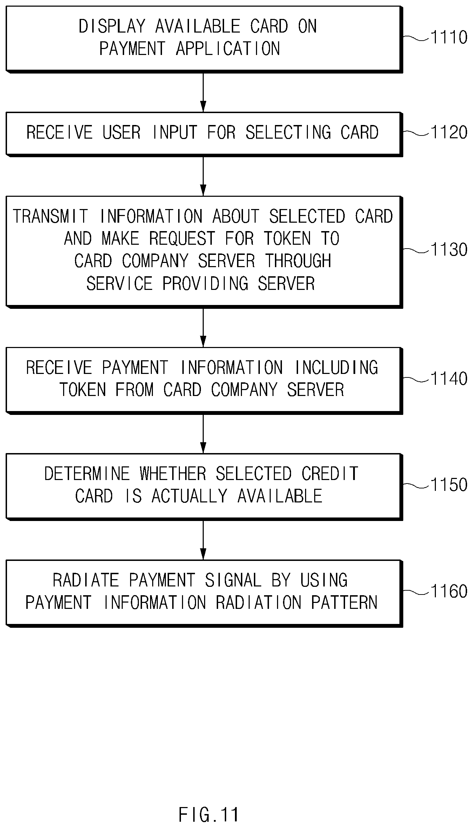

In operation 540, the electronic device 400 may request a payment information transmission scheme (e.g., a radiation pattern) for the location of the electronic device 400, which has been identified in operation 520, from the service providing server. According to various embodiments of the present disclosure, the payment information transmission scheme (e.g., a radiation pattern) may be performed in operation 1130 of FIG. 11, which will be described below. Furthermore, according to various embodiments of the present disclosure, the payment information transmission scheme (e.g., a radiation pattern) may be requested and obtained when the electronic device 400 requests the service providing server to identify the location of the electronic device 400.

In operation 550, the electronic device 400 may display the available payment means identified in operation 530 on the payment application executed in operation 510. According to various embodiments of the present disclosure, in operation 550, the electronic device 400 may display the payment application on the screen of the electronic device 400 for the first time.

According to various embodiments of the present disclosure, some of operations 510 to 550 may be performed at the same time, and the sequence of the operations may be modified. Furthermore, some of the operations, for example, operation 540 may be performed after operation 550.

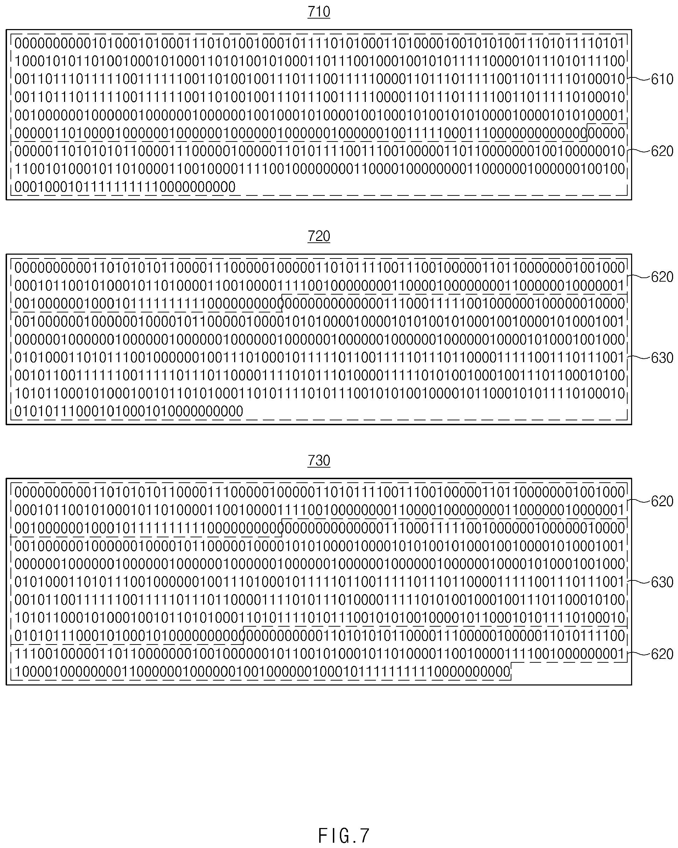

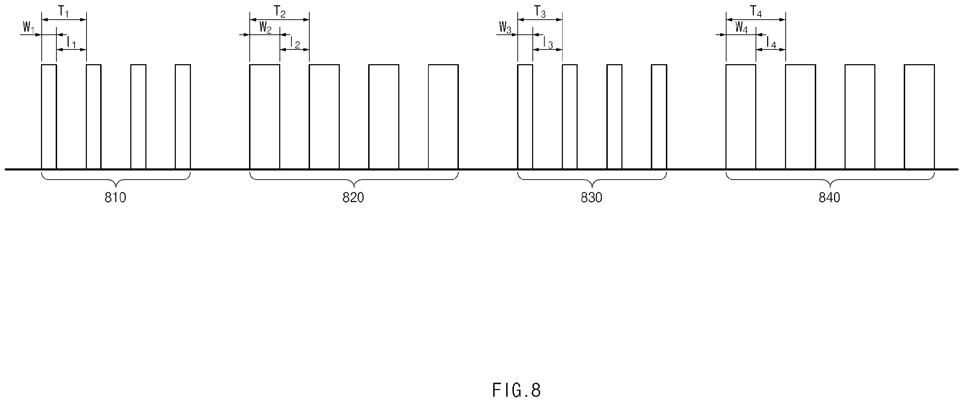

Hereinafter, an operation in which the payment signal generation circuit 460 generates a payment signal from payment information that includes track 1 information and/or track 2 information of the selected payment means, for example, a credit card and the payment signal generation circuit 460 radiates the generated payment signal through the MST circuit 450 will be described with reference to FIGS. 6 to 8. An example of the track 1 information and the track 2 information will be described with reference to FIG. 6, and a modified example of the track 1 information and the track 2 information for increasing a payment success rate will be described with reference to FIG. 7. In addition, various transmission schemes (e.g., radiation patterns) of the track 1 information and the track 2 information for increasing a payment success rate will be described with reference to FIG. 8.

FIG. 6 illustrates a binary string obtained by encoding track 1 information and track 2 information of a credit card, according to various embodiments of the present disclosure.

A first binary string 610 is illustrated at the top of FIG. 6, and a second binary string 620 is illustrated at the bottom of FIG. 6.

The first binary string 610 and the second binary string 620 may have a form in which a longitudinal redundancy check character (LRC), lead data, and tail data are added to track 1 information 612 and track 2 information 622. The LRC may be added to check a parity to determine a transmission error.

For example, the first binary string 610 may include the track 1 information 612, an LRC "0111000" 614, lead data "0000000000" 616, and tail data "0000000000" 618. The second binary string 620 may include the track 2 information 622, an LRC "11111" 624, lead data "0000000000" 626, and tail data "0000000000" 628.

FIG. 7 illustrates a pulse including a plurality of pieces of track information according to various embodiments of the present disclosure.

According to various embodiments of the present disclosure, the electronic device 400 may radiate one piece of track information through the MST circuit 450 for one period T. The radiation method may be referred to as a simple sequence. For example, the MST circuit 450 may radiate a pulse including the first binary string 610 for one period T, or may radiate a pulse including the second binary string 620 for one period T.

In another example, the electronic device 400 may also radiate a plurality of pieces of track information through the MST circuit 450 for one period T. The radiation method may be referred to as a complex sequence.

Referring to FIG. 7, a first pulse 710 may be obtained by sequentially lumping the first binary string 610 corresponding to the track 1 information and the second binary string 620 corresponding to the track 2 information together.

A second pulse 720 may be obtained by sequentially lumping the second binary string 620 corresponding to the track 2 information and a third binary string 630 that is the reverse of the first binary string 610 corresponding to the track 1 information. The third binary string 630 may differ from the first binary string 610 in that a credit card is passed through, or swiped over, a card reader in an opposite direction.

A third pulse 730 may be obtained by sequentially lumping the second binary string 620 corresponding to the track 2 information, the third binary string 630 corresponding to the reverse of the track 1 information, and the second binary string 620 corresponding to the track 2 information.

According to various embodiments of the present disclosure, the MST circuit 450 may radiate a plurality of pulses for a predetermined period of time. For example, the MST circuit 450 may repeatedly radiate a pulse including only the first binary string 610 or a pulse including only the second binary string 620 for a predetermined period of time. Alternatively, the MST circuit 450 may repeatedly radiate the first pulse 710 for a predetermined period of time, or may alternately transmit the first pulse 710 and the second pulse 720.

According to various embodiments of the present disclosure, one pulse may include at least one of track 1 information, track 2 information, and token information of a payment means selected from a payment application or reverse data of at least one thereof. Furthermore, according to various embodiments of the present disclosure, a set of pulses, all of which are different from one another or at least some of which are identical to one another, may be defined as a payment signal.

FIG. 8 illustrates a payment signal including a mixture of a simple transmission sequence and a complex transmission sequence, according to various embodiments of the present disclosure.

The payment signal may be generated in the payment signal generation circuit 460, based on a payment information transmission scheme (e.g., a radiation pattern).

Referring to FIG. 8, the payment signal generation circuit 460 may generate a first simple transmission sequence 810. For example, the payment signal generation circuit 460 may determine to continuously radiate a pulse including information of track 2 four times with a predetermined period T₁ (e.g., once per second for four seconds). Here, the width W₁ of the pulse may vary depending on pulse timing, and the pulse timing may be determined by the payment signal generation circuit 460. For example, the pulse timing of the first simple transmission sequence 810 may be determined to be 300us.

Next, the payment signal generation circuit 460 may generate a first complex transmission sequence 820. For example, the payment signal generation circuit 460 may determine to continuously radiate a pulse including information of track 1 and reversed track 2 four times with a predetermined period T₂. The payment signal generation circuit 460 may make the period T₂ identical to the period T₁ by reducing the pulse timing of the first complex transmission sequence 820. In another example, the payment signal generation circuit 460 may also make the pulse timing of the first complex transmission sequence 820 identical to that of the first simple transmission sequence 810. If so, a pulse width W₂ may be greater than the pulse width W₁ since the amount of information transmitted for the pulse width W₂ is larger than the amount of information transmitted for the pulse width W₁. Accordingly, the period T₂ may be longer than the period T₁ if intervals I₁ and I₂ are set to be identical to each other. However, the electronic device 400 may make the period T₂ identical to the period T₁ by making the interval I₂ smaller than the interval I₁.

Then, the payment signal generation circuit 460 may generate a second simple transmission sequence 830. For example, the payment signal generation circuit 460 may determine to continuously radiate a pulse including information of track 2 four times with a predetermined period T₃. At this time, the pulse timing of the second simple transmission sequence 830 may be longer than that of the first simple transmission sequence 810. For example, the pulse timing of the second simple transmission sequence 830 may be 500us when the pulse timing of the first simple transmission sequence 810 is 300us. For example, when pulse timing is longer, this may mean that a credit card is slowly passed through a card reader.

After that, the payment signal generation circuit 460 may generate a second complex transmission sequence 840. For example, the payment signal generation circuit 460 may determine to continuously radiate a pulse including information of track 1 and track 2 four times with a predetermined period T₄.

The payment signal generation circuit 460 according to various embodiments of the present disclosure may adjust pulse timing. In another example, the payment signal generation circuit 460 may adjust the period of a pulse. In another example, the payment signal generation circuit 460 may adjust a predetermined period of time during which the payment signal is radiated.

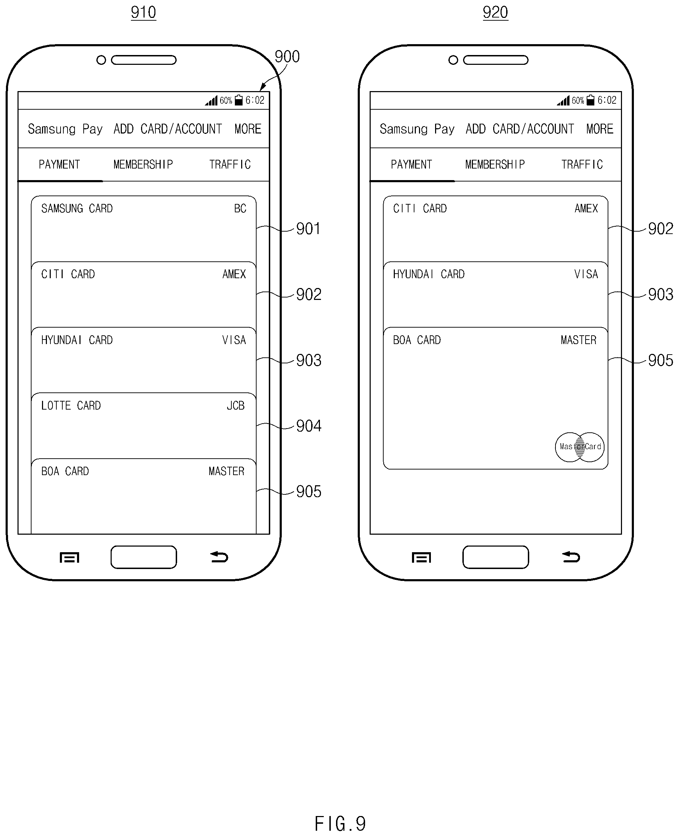

FIG. 9 illustrates an execution screen of a payment application, according to various embodiments of the present disclosure.

A first embodiment 910 corresponds to an application execution screen when a payment application 900 is executed in Korea, and a second embodiment 920 corresponds to an application execution screen when the payment application 900 is executed in the United States.

Referring to the first embodiment 910, a SAMSUNG CARD 901, a CITY CARD 902, a HYUNDAI CARD 903, a LOTTE CARD 904, and a BOA CARD 905 may be displayed on the execution screen of the payment application 900. The SAMSUNG CARD 901, the CITY CARD 902, the HYUNDAI CARD 903, the LOTTE CARD 904, and the BOA CARD 905 may all be credit cards available in Korea.

For example, since SAMSUNG CARD CO., LTD., CITY CARD CO., LTD., HYUNDAI CARD CO., LTD., and LOTTE CARD CO., LTD. are all credit card companies in Korea, the SAMSUNG CARD 901, the CITY CARD 902, the HYUNDAI CARD 903, and the LOTTE CARD 904 may be available in Korea. Furthermore, although BOA CARD CO., LTD. is not a credit card company in Korea, the BOA CARD 905 may be available in Korea since the MASTER CARD brand supports overseas payment.

Accordingly, the payment application 900 may display the SAMSUNG CARD 901, the CITY CARD 902, the HYUNDAI CARD 903, the LOTTE CARD 904, and the BOA CARD 905 on the application execution screen.

Referring to the second embodiment 920, only the CITY CARD 902, the HYUNDAI CARD 903, and the BOA CARD 905 may be displayed on the execution screen of the payment application 900. For example, since the BC CARD brand of the SAMSUNG CARD 901 and the URS CARD brand of the LOTTE CARD 904 do not support overseas payment, only the CITY CARD 902, the HYUNDAI CARD 903, and the BOA CARD 905 may be displayed on the execution screen of the payment application 900.

While FIG. 9 illustrates the embodiment in which the credit cards issued in Korea are used in the United States, various embodiments of the present disclosure are not limited thereto. Various embodiments of the present disclosure relate to overseas payment and may include, for example, a case of making payment in a country other than the country in which a card has been issued (e.g., a case where a card issued in Korea is used in the United States) or a case of making payment in a district other than the district in which a card has been issued in the United States having autonomous states, China having autonomous nations, or the like (e.g., a case where a card issued in the state of New York is used in the state of Pennsylvania).

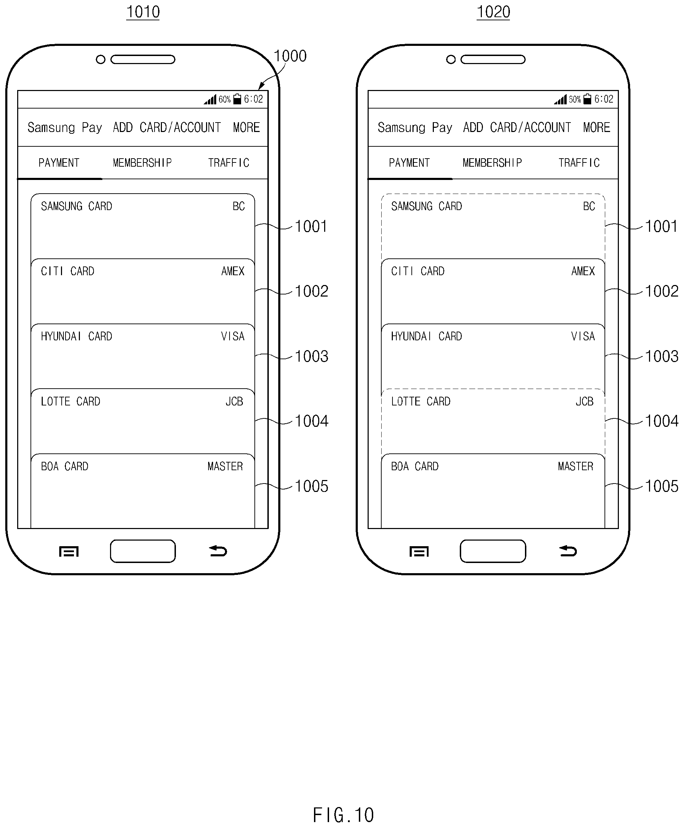

FIG. 10 illustrates an execution screen of a payment application, according to various embodiments of the present disclosure.

As in FIG. 9, a first embodiment 1010 representing a payment screen of a payment application 1000 executed in Korea and a second embodiment 1020 representing a payment screen of the payment application 1000 executed in the United States are illustrated in FIG. 10. Since the first embodiment 1010 in FIG. 10 corresponds to the first embodiment 910 in FIG. 9, separate descriptions thereof will be omitted.

Referring to the second embodiment 1020 in FIG. 10, a SAMSUNG CARD 1001 and a LOTTE CARD 1004 unavailable for payment in the United States may be translucently displayed or dimmed on an execution screen of the payment application 1000.

FIG. 11 is a flowchart illustrating a method for radiating a payment signal of a selected credit card in an electronic device, according to various embodiments of the present disclosure.

Referring to FIG. 11, the method illustrated in FIG. 11 according to various embodiments, in which the electronic device radiates the payment signal of the selected credit card, may include steps that are processed in a time-based order in the electronic devices illustrated in FIGS. 1 to 10 according to various embodiments, a service providing server, and a card company server. Therefore, although omitted in the following description, the contents described in relation to the electronic devices of FIGS. 1 to 10, the service providing server, and the card company server may be similarly applied to the method illustrated in FIG. 11.

In operation 1110, the electronic device 400 (e.g., the display circuit 410) may display, on a payment application, one or more cards available in the location of the electronic device 400.

In operation 1120, the electronic device 400 (e.g., the user input circuit 420) may receive a user input for selecting any one of the available cards displayed on the payment application in operation 1110.

In operation 1130, the electronic device 400 (e.g., the communication circuit 430) may transmit a token request including information about the card selected in operation 1120 to a card company server through a service providing server. Furthermore, according to various embodiments of the present disclosure, the electronic device 400 (e.g., the communication circuit 430) may request a payment information transmission scheme (e.g., a radiation pattern) depending on the location of the electronic device 400 from the service providing server.

In operation 1140, the electronic device 400 (e.g., the communication circuit 430) may receive, from the card company server, payment information including the token requested in operation 1130. According to various embodiments of the present disclosure, the electronic device 400 (e.g., the communication circuit 430) may receive the payment information through the service providing server.

In operation 1150, the electronic device 400 (e.g., the processor 470) may determine whether the card selected in operation 1120 is available in the location of the electronic device 400, by using the token received in operation 1140. For example, in the case where the electronic device 400 is located in the United States, the selected credit card may not be actually used if the selected credit card has been suspended or has exceeded the limit (e.g., overseas credit limit) or is prevented from being used in the United States, or an amount of payment exceeds the limit even though the card company or the card brand of the selected card is available in the United States. Alternatively, in the case where the selected card is suspected of being stolen due to frequent cash withdrawals, the electronic device 400 may receive a notification that the selected payment means is unavailable.

As described above, various embodiments of the present disclosure are not limited to the case where a card issued in Korea is used in the United States. Various embodiments of the present disclosure relate to overseas payment and may include, for example, a case of making payment in a country other than the country in which a card has been issued (e.g., a case where a card issued in Korea is used in the United States) or a case of making payment in a district other than the district in which a card has been issued in the United States having autonomous states, China having autonomous nations, or the like (e.g., a case where a card issued in the state of New York is used in the state of Pennsylvania).

According to various embodiments of the present disclosure, the electronic device 400 (e.g., the communication circuit 430) may directly receive, from the card company server, a notification as to whether the card selected in operation 1120 is available in the location of the electronic device 400.

In operation 1160, the electronic device 400 (e.g., the payment circuit 440) may radiate a payment signal through the MST circuit 450 by using the payment information transmission scheme (e.g., a radiation pattern) when the determination result in operation 1150 shows that the card selected in operation 1120 is available in the location of the electronic device 400.

The payment signal may be generated as described above with reference to FIGS. 6 to 9. Furthermore, the payment information transmission scheme (e.g., a radiation pattern) may be received as a result of the request in operation 540 of FIG. 5.

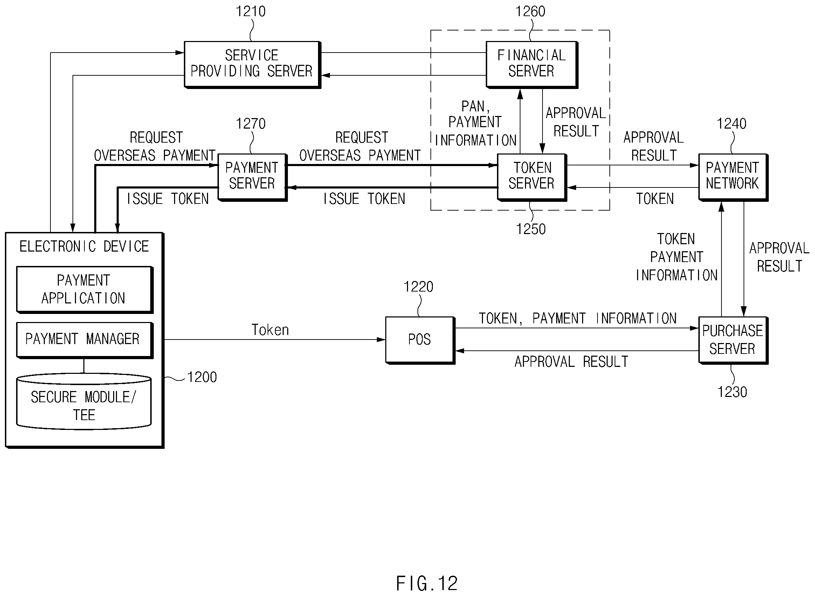

FIG. 12 illustrates a mobile payment environment according to various embodiments of the present disclosure.

Referring to FIG. 12, the mobile payment environment may include an electronic device 1200, a service providing server 1210, a POS device 1220, a purchase server 1230, a payment network 1240, a token server 1250, a financial server 1260, and a payment server 1270.

To register a payment means, for example, a credit card in a payment application, the electronic device 1200 (e.g., the electronic device 101 or the electronic device 400) may provide information about the payment means to the service providing server 1210. The service providing server 1210 may inquire the financial server 1260 about whether the payment means information received from the electronic device 1200 to register the credit card is accurate. The credit card may be registered in the service providing server 1210 and the payment application with an approval from the financial server 1260.

When the payment application is executed, the electronic device 1200 may transmit an MCC or MNC value to the service providing server 1210 to inquire whether there is a credit card available for overseas payment among credit cards registered in advance in the payment application. The service providing server 1210 may determine whether the credit cards registered in the payment application are available in foreign countries (e.g., in the location of the electronic device 1200), based on the information about the credit card received in the process of registering the credit card.

The electronic device 1200 may display, on the payment application, credit cards available in foreign countries. A user may select one of the credit cards available in foreign countries to make payment. The electronic device 1200 may transmit, to the payment server 1270, a request for overseas payment that includes information about the selected credit card. The payment server 1270 may transmit the request for overseas payment to the token server 1250 and may receive a token from the token server 1250. The token may be transferred to the electronic device 1200. The token may include information about whether the selected credit card is available in the corresponding country.

According to various embodiments of the present disclosure, the payment server 1270 may be, for example, a server of Samsung Pay and may be integrated with the service providing server 1210 although illustrated as being separate from the service providing server 1210. Furthermore, the token server 1250 may be a card company server of the selected credit card or a server of the bank that has issued the credit card.

According to various embodiments of the present disclosure, through a payment manager, the electronic device 1200 may request the card company's SDK installed in a secure module/trusted execution environment (TEE) or an embedded secure element (eSE) to generate a token such that the payment application obtains token information.

The electronic device 1200 may transfer payment information including the received or obtained token (e.g., track 1 information or track 2 information of the selected credit card) to the POS device 1220 as an NFC or MST signal, and the POS device 1220 may transfer the token along with payment information (e.g., an amount of payment) to the purchase server 1230. The purchase server 1230 may transfer the payment information and the token to the token server 1250 through the payment network 1240. The token server 1250 may transfer PAN information and the payment information to the financial server 1260 and may receive an approval result from the financial server 1260. The approval result may be transferred to the POS device 1220 through the token server 1250, the payment network 1240, and the purchase server 1230.

According to various embodiments of the present disclosure, the payment network 1240, the token server 1250, and the financial server 1260 may be implemented with a single server although separately illustrated in FIG. 12.

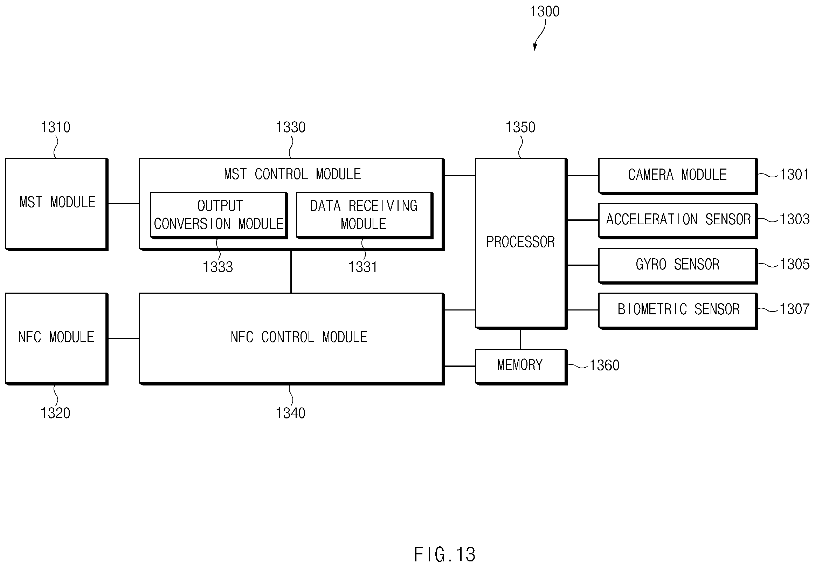

FIG. 13 illustrates another form of an electronic device according to an embodiment.

Referring to FIG. 13, an electronic device 1300 according to an embodiment (e.g., the electronic device 101, the electronic device 400, or the electronic device 1200) may include, for example, a camera module 1301 (e.g., the camera module 291), an acceleration sensor 1303 (e.g., the acceleration sensor 240E), a gyro sensor 1305 (e.g., the gyro sensor 240B), a biometric sensor 1307 (e.g., the biometric sensor 2401), an MST module 1310 (e.g., the MST circuit 450), an NFC module 1320 (e.g., the NFC module 228), an MST control module 1330 (e.g., the payment circuit 440), an NFC control module 1340 (e.g., the RF module 229), a processor 1350 (e.g., the processor 120), and a memory 1360 (e.g., the memory 130). The camera module 1301 may take an image of a card necessary for payment to obtain card information. The camera module 1301 may recognize the card information (e.g., the card company, the card number, the card expiration date, the card holder, or the like) on the card through an optical character reader (OCR) function. Alternatively, a user may enter necessary card information into the electronic device 1300 by using an input device (e.g., a touch panel, a pen sensor, a key, an ultrasonic input device, a microphone input device, or the like) included in the electronic device 1300.

According to an embodiment, the acceleration sensor 1303 or the gyro sensor 1305 may obtain the location of the electronic device 1300 at the time of payment. The obtained location information of the electronic device 1300 may be transferred to the processor 1350. Based on the obtained location information of the electronic device 1300, the processor 1350 may adjust the intensity of a magnetic field (the intensity of current) transmitted from the MST module 1310 to a payment processing device or may select a coil antenna to be used to transmit information from a plurality of coil antennas.

According to an embodiment, the biometric sensor 1307 may be used to collect information (e.g., fingerprint information) related to user authentication. The processor 1350 may activate the biometric sensor 1307 when requested to execute a payment application or to transmit information related to payment. The processor 1350 may compare the collected biometric information with stored biometric information to process user authentication.

According to an embodiment, the MST control module 1330 may include a data receiving module 1331 and an output conversion module 1333. The data receiving module 1331 may receive a logical low/high pulse signal (information related to payment) that includes payment information transmitted by the processor 1350 or a secure module (e.g., an eSE). The output conversion module 1333 may include a circuit for converting data recognized by the data receiving module 1331 into a necessary form to transfer the data to the MST module 1310. The circuit may include an H-bridge for controlling the direction of voltage supplied to opposite ends of the MST module 1310. The H-bridge may include a circuit structure connected in an H shape by using four switch structures. The MST control module 1330 may control to stop transmitting payment-related information when payment processing information is received from a payment server (e.g., the payment server 1270 of FIG. 12). Furthermore, the MST control module 1330 may enter a deactivated state at the same time as stopping transmitting the payment-related information.

The NFC module 1320 may transmit a specified signal in response to control of the NFC control module 1340. Alternatively, the NFC module 1320 may receive a signal transmitted by an external electronic device (e.g., the POS device 1220 of FIG. 12) and may transfer the received signal to the NFC control module 1340. The NFC control module 1340 may determine whether the external electronic device exists, through the NFC module 1320. The NFC control module 1340 may control to transmit payment-related information when it is determined that the external electronic device exists.

According to an embodiment, based on card information input through the camera module 1301 or the input device (e.g., a touch panel, a pen sensor, or the like), the electronic device 1300 may receive payment information (e.g., track 1/2/3 or token information) included in a magnetic stripe of a magnetic card from a financial server (e.g., a card company/bank server) through a communication module (not illustrated) and may store the payment information in a necessary form in the memory 1360 or a separate secure module (e.g., an eSE).

According to an embodiment, the processor 1350 may request the payment server to issue a token, in response to a request for payment. The processor 1350, when receiving payment processing information from the payment server, may control to stop transmitting payment-related information. Furthermore, the processor 1350 may control to deactivate the MST control module 1330, the MST module 1310, the NFC control module 1340, and the NFC module 1320. According to an embodiment, the processor 1350 may control to output information (e.g., a screen UI, an image, text, or sound) that corresponds to the receipt of the payment processing information.

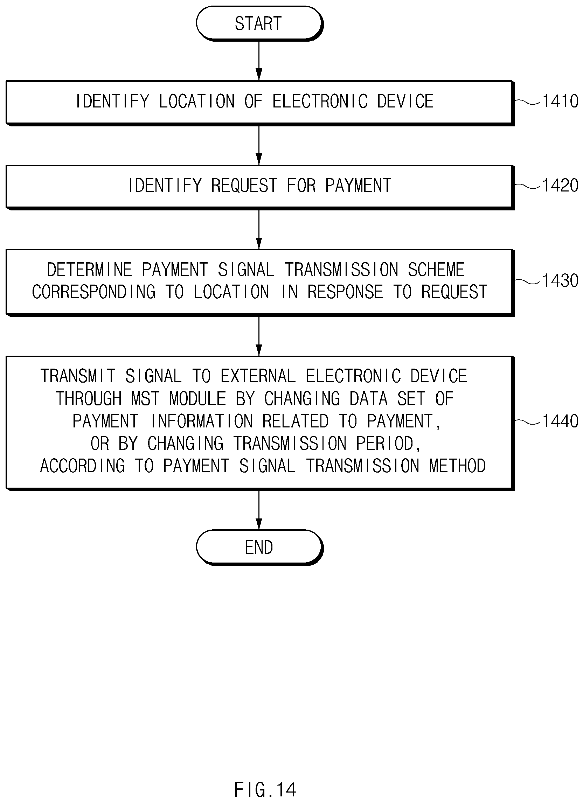

FIG. 14 illustrates a method for transmitting a payment signal in an electronic device, according to various embodiments of the present disclosure.

In operation 1410, the electronic device 400 (e.g., the processor 470) may identify the location of the electronic device 400 by providing an MCC value or an MNC value to a service providing server.

In operation 1420, the electronic device 400 (e.g., the processor 470) may identify a request for payment that is received from a user.

In operation 1430, the electronic device 400 (e.g., the payment circuit 440) may determine a payment signal transmission scheme corresponding to the location of the electronic device 400, based on the payment request received in operation 1420.

In operation 1440, the electronic device 400 (e.g., the payment circuit 440) may transmit a payment signal to an external electronic device (e.g., a POS device) through the MST circuit 450 by changing a data set of payment information related to the payment, or by changing a transmission period, according to the payment signal transmission scheme determined in operation 1430.

The term "module" used in the present disclosure may represent, for example, a unit including one or more combinations of hardware, software and firmware. The term "module" may be interchangeably used with the terms "unit", "logic", "logical block", "part" and "circuit". The "module" may be a minimum unit of an integrated part or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random access memory (RAM), or a flash memory). Also, the one or more instructions may contain a code made by a compiler or a code executable by an interpreter. The above hardware unit may be configured to operate via one or more software modules for performing an operation according to various embodiments, and vice versa.

A module or a program module according to various embodiments may include at least one of the above components, or a part of the above components may be omitted, or additional other components may be further included. Operations performed by a module, a program module, or other components according to various embodiments may be executed sequentially, in parallel, repeatedly, or in a heuristic method. In addition, some operations may be executed in different sequences or may be omitted. Alternatively, other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a magnetic secure transmission (MST) module;
a display;
a wireless communication module; and
a processor,
wherein the processor is configured to:
identify a location information of the electronic device;
identify a request for payment;
determine a payment transmission scheme corresponding to the location information in response to the request; and
transmit a signal to an external electronic device through the MST module by changing a data set of payment information related to the payment, or by changing a transmission period, according to the payment transmission scheme.

2. The electronic device of claim 1, wherein the processor is configured to:
transmit by using a first transmission period or a first data set of the payment information when the payment transmission scheme corresponds to a first payment transmission scheme; and
transmit by using a second transmission period or a second data set of the payment information when the payment transmission scheme corresponds to a second payment transmission scheme.

3. The electronic device of claim 1, wherein the processor is configured to:
execute a payment application; and
identify the request by using the payment application and identify the location information in response to the execution of the payment application.

4. The electronic device of claim 1, wherein the processor is configured to:
identify information about a country, a region, or a store in which the electronic device is located, as at least a portion of the location information.

5. The electronic device of claim 1, wherein the processor is configured to:
identify the request for the payment by using a user's biometric information.

6. The electronic device of claim 1, wherein the processor is configured to:
receive at least a portion of the payment transmission scheme from another external electronic device by using the wireless communication module.

7. The electronic device of claim 1, further comprising:
a memory configured to store a plurality of payment transmission schemes,
wherein the processor is configured to select at least one of the plurality of payment transmission schemes as the payment transmission scheme.

8. The electronic device of claim 1, further comprising:
a memory configured to store a plurality of pieces of payment means information,
wherein the processor is configured so as not to display at least one of the plurality of pieces of payment means information through the display, or to display the at least one piece of payment means information differently from the remaining payment means information, based at least on the location information.

9. The electronic device of claim 8, wherein the processor is configured to receive token information from a server corresponding to a selected payment means by using the wireless communication module, and
wherein the token information includes information about whether the selected payment means is available.

10. The electronic device of claim 9, wherein the processor is configured so as not to display at least one of the plurality of pieces of payment means information through the display, or to display the at least one piece of payment means information differently from the remaining payment means information, based at least on the received token information.

11. The electronic device of claim 9, wherein the processor is configured such that the request for the payment includes information about a payment means selected from a plurality of payment means stored in the memory and the data set of the payment information includes at least one of token information and track 1 information and track 2 information of the selected payment means.

12. The electronic device of claim 11, wherein the data set of the payment information includes reverse information of at least one of the token information and the track 1 information and the track 2 information of the selected payment means, or a combination of at least two thereof.

13. A method related to payment performed in an electronic device, the method comprising:
identifying a location information of the electronic device;
identifying a request for payment;
determining a payment transmission scheme corresponding to the location information in response to the request; and
transmitting a signal to an external electronic device through a magnetic secure transmission (MST) module operatively connected to the electronic device, by changing a data set of payment information related to the payment, or by changing a transmission period, according to the payment transmission scheme.

14. The method of claim 13, wherein the identifying of the location information of the electronic device includes:
transmitting mobile country code (MCC) information or mobile network code (MNC) information to a service providing server; and
receiving the location information of the electronic device from the service providing server.

15. A computer-readable storage medium storing an instruction that, when executed, causes at least one processor to:
identify a location information of an electronic device;
identify a request for payment;
determine a payment transmission scheme corresponding to the location information in response to the request; and
transmit a signal to an external electronic device through an MST module by changing a data set of payment information related to the payment, or by changing a transmission period, according to the payment transmission scheme.
